# EUROPEAN PATENT APPLICATION

(11) **EP 2 836 040 A1**
(43) Date of publication of application: **11.02.2015**
(21) Application number: 13179820.9
(22) Date of filing: 09.08.2013
(51) Int. Cl.: H04W 72/04

(54) **Systems and methods for using quality of service to provide symbol fair scheduling**

(71) Applicant: Proximetry Poland Sp. z o.o., 40-203 Katowice (PL)
(72) Inventor: Grochla, Krzysztof, 44-120 Pyskowice (PL); Lawczys, Krzysztof, 32-660 Gorzow (PL); Seman, Aleksander, 44-200 Rybnik (PL)

(57) **Abstract**

Systems and methods for using quality of service ("QoS") parameters to enable a base station that has a built-in fairness in rate scheduling algorithm to provide fairness in symbol transmissions to the clients served by the base station.

## Description

### Technical Field

Embodiments of the present invention relate to communication systems.

### Background Art

A communication system may include base stations that communicate with clients. A base station may include a scheduling algorithm that allocates the resources of the base station for communicating (e.g., transmitting, receiving) information (e.g., data) with two or more clients. A scheduling algorithm may operate to provide communication services fairly to all clients with respect to the rate at which information may be transmitted.

A communication system may further include a network management system that implements quality of service ("QoS") for providing a level of services to clients. In general, QoS requirements specify that each client should receive a minimum level of service.

The operation of a rate fairness scheduling algorithm in a base station may preclude providing a minimum level of service to each client as specified by QoS requirements. In a situation where the scheduling algorithm of the base station cannot be replaced, modified, or disabled, , it would be beneficial to have some way to work around (e.g., bypass) the scheduling algorithm to provide symbol fair communication.

### Summary of invention

Systems and methods for using quality of service ("QoS") parameters to enable a base station that has a built-in fairness in rate scheduling algorithm to provide fairness in symbol transmissions to the clients served by the base station.

### Brief description of drawings

Embodiments of the present invention will now be further described with reference to the drawing, wherein like designations denote like elements, and:

FIG. 1 is a function block diagram of a communication system managed by a network management system according to various aspects of the present invention; and

FIG. 2 is a method for setting QoS values so that a base station may provide fairness in symbol transmissions according to various aspects of the present invention.

### Description of embodiments

A base station may transmit information to two or more clients under the control of a scheduling algorithm that uses a rate (e.g., bandwidth) fairness algorithm (e.g., policy) to allocate transmission resources between the clients. A rate fairness policy may result in a majority of the transmit resources of the base station being dedicated to one client depending on the quality of the wireless signal between the base station and the client and the type of modulation used to transmit information to each client.

The terms "quality of signal", "quality of wireless signal" and/or "signal quality" may refer to any aspect and/or metric for measuring and/or indicating a characteristics of a wireless link between a base station and a client. Signal quality may include signal strength, signal to noise ratio, receive signal strength index ("RSSI"), throughput, channel capacity, and/or bit error rate.

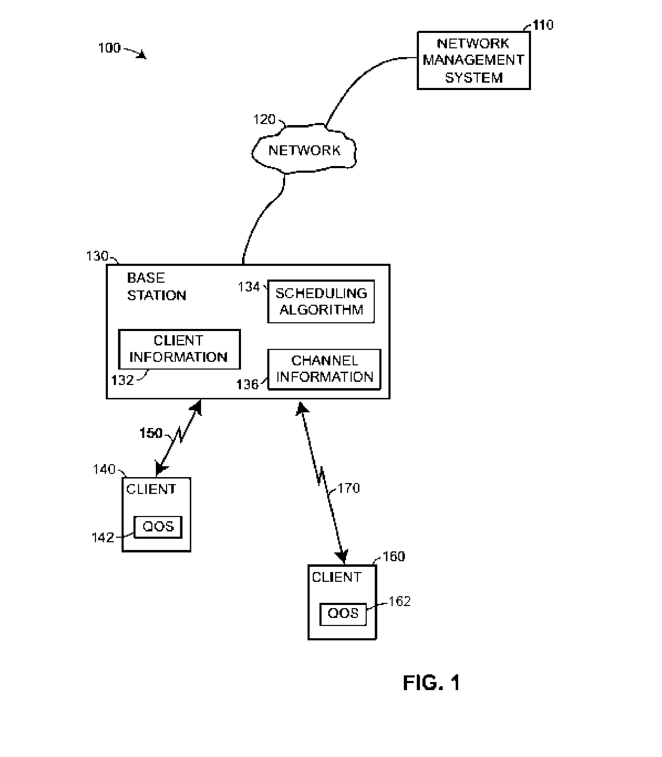

For example, referring to FIG. 1, base station 130 transmits data to client 140 and client 160 via wireless links 150 and 170 respectively. In this example, assume that the signal strength of wireless link 150 is greater than the signal strength of wireless link 170. The greater signal strength of wireless link 150 permits wireless link 150 to use a more efficient (e.g., more bits per symbol) modulation than the modulation used by wireless link 170. The difference in modulation allows wireless link 150 to provide information at a higher bit rate than wireless link 170.

In this example, assume that wireless link 170 carries (e.g., transmits, receives), due to signal strength and modulation, data at a rate of 1 Mbit/second while wireless link 150 carries data at a rate of 10 Mbit/second. Because scheduling algorithm 134 of base station 130 implements a rate fairness scheduling algorithm, each client 140 and 160 must be allocated about the same rate of delivery of data. As a result, base station 130 allocates most of its resources for transmitting information on wireless link 170 to achieve a fair transmission rate between wireless links 150 and 170. Under these conditions, base station 130 spends most of its time (e.g., 90%) transmitting data to client 170 over slower link 170 and significantly less time transmitting data to client 140 over faster link 150. In this example, base station 130 may transmit about 1.8 Mbits/second total with 0.9 Mbits/second, about an equal amount, going to each client 140 and 160. Accordingly, the fairness in rate algorithm has provide an about equal data rate to each client.

Network operators may find it difficult meeting QoS requirements when one of the clients has weak signal strength and uses an inefficient modulation when communicating with a base station that implements a fairness in rate scheduling algorithm. A network operator may use a network management system to implement a QoS regime in a network.

A network management system may include conventional network devices (e.g., routers, wire networks, access points, base stations, radios, servers, computers, servers, storage devices, processing circuit). The functions of a network management system may include storing QoS contractual requirements for each client, storing QoS parameters for each client, providing QoS parameters to clients, base stations, and/or other network device that may cooperate to implement QoS. A network management system may communicate with and/or monitor the operation of network devices. Monitoring includes detecting, measuring, and/or reporting characteristics of the operation of the network. Monitoring may include monitoring transmission and reception of data (e.g., characters, symbols), signal quality, and/or operation of a base station including modulation used. Monitoring may include detecting changes in the operation of network devices.

A network management system may include network devices whose operation is dedicated to performing the functions of the network management system. A network management system may further perform its functions by cooperating with and/or temporarily using network devices that perform other functions in the network. A network management system may cooperate with any network device or device capable of communicating with or being controlled by the network to accomplish its functions. A network management system may include any conventional network device that operates to perform all or a part of the functions of a network management system.

A scheduler of a base station that uses a symbol fairness algorithm delivers an equal amount of symbols to each client served by the base station. Using symbol fairness, a client that communicates with the base station over a slow wireless link will receive on average about the same number of symbols as the a client that communicates over a fast wireless link; however, the fast wireless link supports a more efficient modulation where each symbol represents more bits of data, so a client with the faster link receives more data for the same amount of symbols when compared to the data delivered to a client by the slow link.

For example, as discussed above, client 140 communicates with base station 130 over wireless link 150. Wireless link 150 has good signal strength and supports a more efficient modulation. Client 160 communicates with base station 130 over wireless link 170. Wireless link 170 has weaker signal strength and supports a less efficient modulation. If scheduling algorithm 134 were a fairness in symbol algorithm, base station 130 would spend roughly the same amount of time transmitting symbols to client 140 as to client 160; however due to the differences in signal strength and modulation of wireless links 150 and 170, client 140 would receive, for example, the equivalent of 5 Mbits/second whereas client 160 would receive only 0.5 Mbits/second.

Comparing the amount of data transmitted to each client in the fairness in rate example with the amount of data transmitted in the fairness in symbol example, shows that client 140 is significantly penalized by the fairness in rate algorithm because it receives less data (e.g., 0.9 Mbits/second vs. 5 Mbits/second) from the fairness in rate scheduler while client 160 is only slightly penalized by the fairness in symbols algorithm because it receives only slightly less data (e.g., 0.5 Mbits/second vs. 0.9 Mbits/second) from the fairness in symbol scheduler.

The fairness in rate algorithm only slightly rewards clients with poor signal strength and less efficient modulation and significantly penalizes client with strong signal strength and more efficient modulation. A fairness in rate scheduling algorithm may also significantly reduce the total amount of data transmitted by a base station because the base station spends so much of its time transmitting beneath its maximum capacity to clients with poor wireless links.

A fairness in symbols policy affords a network operator an increased chance of meeting QoS requirements for clients that have greater signal strength. Further, minimum required signal strength for meeting QoS requirements may also be defined and be part of a contract between the network operator and the client. Clients serviced by a signal having a signal strength outside of the contract specifications have no promise that contractual QoS requirements will be met.

Although a fairness in symbols policy may be preferable for network operators, network operators may not have control over every base station in a network. An issue may arise when a client is serviced by a base station that implements QoS, but that also uses a fairness in rate scheduling policy that cannot be replaced or modified by the network operator that is responsible for meeting contractual QoS requirements. When a network operator cannot change the scheduling algorithm of a base station, a network operator may, according to various aspects of the present invention, use QoS parameters to bypass the scheduling algorithm of a base station.

In most circumstances, QoS parameters (e.g., 142, 162) provided to a client (e.g., 140, 160) by a network management system (e.g., server) (e.g., 110) are static. The QoS parameters are specified in a contract between the client and the network management company and do not change unless the contract between the client and the network management company changes. The QoS parameters are sent to the clients and possibly to the base stations. During operation, the base station gives priority to the QoS parameters of the clients that it serves in a best effort attempt to meet the QoS requirements of each client. Even though a base station gives priority to the QoS parameters, it still may have a difficult time meeting the QoS requirements when it uses a fairness in rate scheduling algorithm.

According to various aspects of the present invention, the network management system may use the counter-intuitive approach of using dynamic QoS parameters, as opposed to the usual static QoS parameters, to control the number of symbols transmitted to each client. Because a base station gives priority to QoS parameters from the clients that it serves, a network management system may provide QoS parameters that vary with signal strength and modulation to effectively nullify the operation of a base stations built-in and unchangeable fairness in rate scheduling algorithm.

For example, network management system 110 receives channel information from base stations (e.g., 130) and clients (e.g., 140, 160). Channel information may include the signal strength of the wireless links (e.g., 150, 170) between base stations and clients and the modulation used by a base station to communicate with a client. Base station 130 may also store (e.g., maintain, update) channel information 136 (e.g., signal strength, modulation).

Network management system 110 provides QoS parameters (e.g., 142, 162) to clients. A client may provide the QoS parameters in whole or in part to a base station so that the base station may make a best effort attempt to provide service to the client in accordance with the QoS parameters. Base station 130 may store client information 132. Client information 132 may include sufficient QoS information for base station 130 to communicate with each client in accordance with the QoS requirements for each client. In another implementation, a base station may receive QoS parameters for each client from network management system 110.

Base station 130 communicates with clients 140 and 160 via wireless links 150 and 170 respectively. In this example, assume that wireless link 150 has a relatively high signal strength and wireless link 170 has a relatively low signal strength. Because the signal strength of wireless link 150 is strong, the modulation used transmit data is an efficient modulation that transmits many bits per symbol. Conversely, because the signal strength of wireless link 170 is weak, the modulation used transmit data is a less efficient modulation that transmits fewer bits per symbol than the modulation used on wireless link 150.

Scheduling algorithm 134 of base station 130 controls the allocation of resources for transmitting data to clients 140 and 160. In this example, scheduling algorithm 134 uses a fairness in rate algorithm. As discussed above, because wireless link 170 has weak signal strength and uses an less efficient modulation, scheduling algorithm 134 will dedicate a majority of its resources to transmitting data to client 160 and a minority of its resources to transmitting data to client 140.

In this example, the operator of network management system 110 cannot change, modify, or suspend the operation of scheduling algorithm 134 of base station 130.

The poor quality of wireless link 170 may result in communications with client 160 that do not meet the QoS requirements of client 160 regardless of the scheduling algorithm used by the base station. However, wireless link 150 is a high quality link that is likely capable of providing the QoS required for client 140; however, as discussed above, scheduling algorithm 134 limits the data transmitted to client 140 because it is a fairness in rate algorithm that allocates a high percentage of its resources to clients that communicate via poor connections. So, even though wireless link 150 could deliver data in accordance with the QoS requirements (e.g., 5 Mbits/second) to client 140, it cannot because of the limitations of the fairness in rate scheduling algorithm 134 that limit the amount of data (e.g., 0.9 Mbits/second) transmitted to client 140.

According to various aspects of the present invention, network management system 110 may receive channel information regarding the signal strength and modulation of wireless links 150 and 170. Network management system 110 also receive information regarding the maximum number of symbols that base station 130 may transmit per unit time (e.g., symbol rate). Network management system 110 may use information regarding signal quality, modulation, symbol rate information, and/or any other metric that represents radio signal propagation to determine how many symbols should be sent to each client 140 and 160 so that each client receives a fair share of the symbols.

Using the information regarding number of symbols that should be sent to each client, network management system 110 may update QoS parameters 142 and 162 to request base station 130 to provide the desired number of symbols per client. Because base station 130 prioritizes meeting QoS requirements, the detrimental results of fairness in rate scheduling algorithm 134 are mitigated or even nullified. As base station 130 attempts to meet the QoS requirements specified by QoS parameters 142 and 162, base station 130 essentially overrides (e.g., bypasses) the fairness in rate priorities set by scheduling algorithm 134 to provide fairness in symbol transmissions.

The value of any parameter of QoS parameters 142 and 162 may be modified to accomplish fairness in symbol transmissions. In one implementation, QoS parameters 142 and 162 include parameters for specifying the maximum bandwidth and minimum bandwidth to be provided to clients 140 and 160 respectively. In another implementation, QoS parameters 142 and 162 include parameters for specifying the maximum and minimum number of symbols to be provided to clients 140 and 160 respectively.

In an implementation that includes QoS parameters for minimum and maximum bandwidth, network management system 110 may set the minimum and maximum parameters to be the bandwidth that would be provided by a fairness in symbol algorithm. In a fairness in symbol regime, discussed above, wireless link 150 may provide a bandwidth of about 5 Mbits/second and wireless link 170 may provide a bandwidth of about 0.5 Mbits/second. Network management system 110 may set the value of the minimum and/or maximum bandwidth parameters of QoS parameters 142 to 5 Mbits/second and the value of the minimum and/or maximum bandwidth parameters of QoS parameters 162 to 0.5 Mbits/second. As base station 130 attempts to provide data in accordance with QoS parameters 142 and 162, base station 130 will perform more like a base station that has a fairness in symbol transmission algorithm than a base station with fairness in rate scheduling algorithm 134.

Network management system 110 may monitor the system for changes in signal strength, modulation, and base station symbol rate. Responsive to a change, network management system 110 may modify the values of QoS parameters 142 and/or 162 so that base station 130 transmits data more in accordance with a fairness in symbol algorithm than the fairness in rate scheduling algorithm 134.

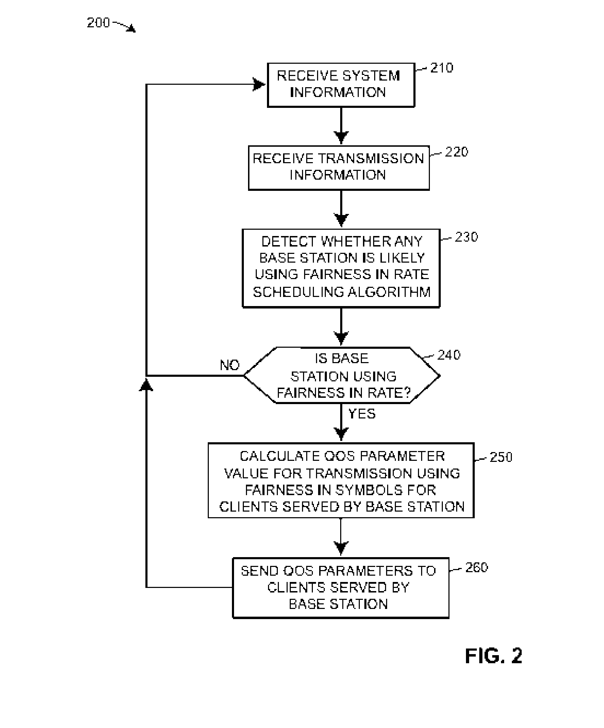

Network management system 110 may perform method 200, referring to FIG. 2, to override fairness in rate scheduling algorithm 134. Method 200 includes receive function 210, receive function 220, detect function 230, decide function 240, calculate function 250, and send function 260. A function of the method may be performed as soon as the function receives sufficient information (e.g., data). The functions may be performed serially. The performance of two or more functions may overlap (e.g., same time, in parallel). A result (e.g., information data) of one function may be provided (e.g., available) for use by another function.

Receive function 210 includes receiving information about the system (e.g., system information) managed by network management system 110. System information may include information regarding the signal quality of a wireless link, modulation used to transmit to a client via a wireless link, the maximum symbol rate of a base station, and/or any other metric that represents radio signal propagation. System management system 110 may store system information, maintain a chronological record of system information, sort system information, and/or prepare system information to be used in a calculation. Network management system 110 may compare present system information to past system information to detect changes in system information.

A network management system may receive information about the system via a network (e.g., 120). A network management system may receive information from a base station and/or a client. A network management system may include a processing circuit (e.g., server, computer, microprocessor, signal processor) for receiving, storing, and/or manipulating (e.g., using to perform a calculation) the information.

Receive function 220 includes receiving information (e.g., transmission information) about the number of symbols transmitted by a base station to a client. The transmission information received by function 220 may be used to determine an amount and/or a rate of data transmitted by a base station to a client. The transmission information may be detected in the absence of implementing QoS requirements so that the scheduling algorithm of the base station may have a more direct influence on the transmission of data to clients. The transmission information may be detected while a base station attempts to provide information in accordance with QoS requirements. System management system 110 may store transmission information and/or keep a chronological record of transmission information. Network management system may compare present transmission information to past transmission information to detect changes in transmission information.

Detect function 230 detects whether a base station likely uses a fairness in rate scheduling algorithm. The information received by function 220 may be used, possibly in conjunction with the system information received by function 210, to determine the type of scheduling algorithm used by a base station. The detect function may calculate an amount of expected data to be transmitted by various scheduling algorithms for the signal strengths and modulations of the various wireless links of the system. The detect function may compare the expected data transmitted to the actual data transmitted to determine the likelihood that a base station is using a particular scheduling algorithm.

In another aspect of the present invention, detecting the scheduling algorithm of a base station and acting on that information (e.g., 240) may be omitted by providing QoS parameters that seek to enforce a fairness in symbol policy to all base stations regardless of the scheduling algorithm used by the base station.

Decision function 240 determines (e.g., decides) whether a base station is using a fairness in rate scheduling algorithm and takes action in accordance with its decision. If the base station does not appear to be using a fairness in rate algorithm, control (e.g., execution) moves from decision function 240 to receive function 210. Functions 210 - 240 may be repeated for each base station in the system. Functions 210 - 240 may be repeated to monitor for changes in the system. If a base station appears to be using a fairness in rate scheduling algorithm, control from decision function 240 moves to calculate function 250.

Calculate function 250 uses system information received by function 210 to determine the number and/or rate of symbols that a base station would transmit to the clients that it services using a fairness in symbol scheduling algorithm. Any calculation performed by calculate function 250 may be performed by the processing circuit of network management system 110. Calculate function 250 uses the result of its calculations to determine the values of the QoS parameters for each client served by the base station that will enable the base station to delivery data in accordance with a fairness in symbol algorithm. Calculate function 250 prepares QoS parameters (e.g., 142, 162) for each client serviced by the base station (e.g., 130).

In send function 260, network management system 110 sends the QoS parameters (e.g., 142, 162) to the clients serviced by a base station that likely has a built-in fairness in rate scheduling algorithm. The clients use the QoS parameters to establish the service that they will receive from the base station. Providing the service specified by the QoS parameters causes the base station to transmit data as though it were using a fairness in symbol scheduling algorithm rather than its built-in fairness in rate scheduling algorithm. After providing the QoS parameters to the clients and/or base station, control moves from send function 260 to receive function 210.

A network management system may provide QoS parameters to a client and/or a base station via a network that includes wired and/or wireless links for transmitting the QoS parameters.

Because network management system 110 performs receive function 210 and receive function 220 from time-to-time, network management system 110 may detect changes in the system and transmission information, as discussed above, thereby detecting changes in signal strength, modulation, and base stations. Network management system 110 may take action responsive to such changes as discussed herein.

The foregoing description discusses preferred embodiments of the present invention, which may be changed or modified without departing from the scope of the present invention as defined in the claims. Examples listed in parentheses may be used in the alternative or in any practical combination. As used in the specification and claims, the words 'comprising', 'including', and 'having' introduce an open ended statement of component structures and/or functions. In the specification and claims, the words 'a' and 'an' are used as indefinite articles meaning 'one or more'. While for the sake of clarity of description, several specific embodiments of the invention have been described, the scope of the invention is intended to be measured by the claims as set forth below.

## Claims

1. A method, performed by a network management system, to bypass a fairness in rate scheduling algorithm of a base station to achieve fairness in symbol transmission by the base station, the method comprising:
detecting a signal quality of a respective wireless link between the base station and each client that communicates with the base station;
detecting a modulation used by the base station to communicate with each client;
determining in accordance with the signal quality and modulation for each client a number of symbols for transmission to each client to accomplish fairness in symbol transmission; and
in accordance with determining, setting a value of one or more QoS parameters so that transmissions from the base station to the clients provide fairness in symbols.

2. The method of claim 1 wherein detecting a signal quality comprises detecting a signal strength.

3. The method of claim 1 wherein detecting a signal quality comprises detecting a receive signal strength index.

4. The method of claim 1 wherein detecting a signal quality comprises detecting a signal to noise ratio.

5. The method of claim 1 wherein determining comprises calculating a number of symbols received by a client using a fairness in symbols scheduling algorithm.

6. The method of claim 1 wherein setting comprises setting a value for a minimum bandwidth QoS parameter.

7. The method of claim 1 wherein setting comprises setting a value for a maximum bandwidth QoS parameter.

8. The method of claim 1 further comprising repeating determining and setting upon detecting a change in the signal quality of any one wireless link.

9. The method of claim 1 further comprising repeating determining and setting upon detecting a change in the modulation used by the base station to communicate with any one client.
